# EUROPÄISCHE PATENTANMELDUNG

(11) **EP 3 910 202 A1**
(43) Veröffentlichungstag der Anmeldung: **17.11.2021**
(21) Anmeldenummer: 21173886.9
(22) Anmeldetag: 14.05.2021
(51) Int. Cl.: F15B 15/28

(54) **SCHWINGUNGSBASIERTE WEGMESSUNG FÜR LINEARE AKTUATOREN**

(30) Priorität: 15.05.2020 DE 102020113272
(71) Anmelder: Weber-Hydraulik GmbH, 74363 Güglingen (DE)
(72) Erfinder: DIEKMANN, Hans-Jürgen, 69488 Birkenau (DE); JAVDANITEHRAN, Mehdi, 70806 Kornwestheim (DE); DIEFFENBACHER, Felix, 75031 Eppingen (DE)
(74) Vertreter: Lemcke, Brommer & Partner Patentanwälte Partnerschaft mbB

(57) **Zusammenfassung**

Vorgeschlagen wird ein Wegmesssystem (1) zur Ermittlung einer Kolbenposition in einem Zylinder-Kolben-Aggregat (2), umfassend ein Anregungselement (8), einen Detektor (9) und eine mit dem Detektor (9) verbundene Auswerteeinheit (14), wobei das Anregungselement (8) ausgebildet ist, das Zylinder-Kolben-Aggregat (2) durch eine impulshafte oder eine oszillierende Anregung, insbesondere multifrequente Anregung, zu mechanischer Schwingung anzuregen und der Detektor (9) ausgebildet ist, mechanische Schwingungen des Zylinder-Kolben-Aggregats (2) zu erfassen und in Messsignale zu wandeln und bei dem die Auswerteeinheit (14) eingerichtet ist, die Messsignale anhand eines Frequenzspektrums und/oder ein oder mehrerer charakteristischer Frequenzen (R1, R2) einer Kolbenposition zuzuordnen.

## Beschreibung

Die Erfindung betrifft ein Wegmesssystem und ein entsprechendes Messverfahren zur Ermittlung einer Kolbenposition in einem Zylinder-Kolben-Aggregat.

Ein Zylinder-Kolben-Aggregat umfasst einen Kolben, der längsbeweglich in einem Zylinder gelagert ist. Das Zylinder-Kolben-Aggregat weist mindestens einen Zylinderraum auf, der mit einem Medium wie z.B. Luft oder Hydrauliköl unter Druck befüllt werden kann, um eine Bewegung des Kolbens zu bewirken. Im Betrieb des Zylinder-Kolben-Aggregates z.B. in einer mobilen Arbeitsmaschine kann es erforderlich sein, eine Kolbenposition im Zylinder zu messen. Dies kann durch ein dazu ausgestaltetes Wegmesssystem erfolgen.

Im Stand der Technik sind Wegmesssysteme bekannt, die nach unterschiedlichen Messmethoden arbeiten. Meist erfordert die Integration eines solchen Wegmesssystems bauliche Veränderungen an Zylinder und Kolben. So werden z.B. häufig Hohlbohrungen der Kolbenstange benötigt, die aufwändig in der Herstellung sind.

Ein Wegmesssystem, welches mit elektromagnetischen Funksignalen arbeitet, ist aus der US5325063 bekannt. Zur Bestimmung der Kolbenposition erzeugt eine Signalquelle ein elektromagnetisches Signal, das in den Zylinder eingekoppelt wird. Das eingekoppelte elektromagnetische Signal wird in Abhängigkeit der Kolbenposition im Zylinder in ein elektromagnetisches Antwortsignal gewandelt und von einem Detektor empfangen. Durch eine Auswertung des Antwortsignals kann die Kolbenposition bestimmt werden. Das Messsystem muss innerhalb des Zylinders angebracht werden, was eine bauliche Änderung am Zylinder erfordert. Eine Nachrüstung an vorhandene Zylinder-Kolben-Aggregate ist deshalb nicht möglich. Außerdem ist das Messprinzip empfindlich gegenüber Verschmutzung und Luft im Hydraulikmedium.

Der Erfindung liegt daher die Aufgabe zugrunde, ein Wegmesssystem sowie ein entsprechendes Messverfahren anzugeben, mit dem die Kolbenposition ohne konstruktive Veränderung am Zylinder-Kolben-Aggregat ermittelt werden kann, und bei dem somit der Integrationsaufwand für das Messsystem gering ist.

Die Aufgabe wird hinsichtlich des Wegmesssystems gelöst durch die Merkmale des Anspruchs 1 und hinsichtlich des Messverfahrens durch die Merkmale des Anspruchs 11. Vorteilhafte Ausgestaltungen des Wegmesssystems sind jeweils Gegenstand der abhängigen Ansprüche.

Erfindungsgemäß umfasst das Wegmesssystem ein Anregungselement, einen Detektor und eine Auswerteeinheit. Das Anregungselement ist dazu ausgebildet, das Zylinder-Kolben-Aggregat durch eine impulshafte oder eine multifrequente Anregung zu mechanischer Schwingung anzuregen. Der Detektor ist dazu ausgebildet, mechanische Schwingungen des Zylinder-Kolben-Aggregats zu erfassen und in Messsignale zu wandeln. Die Auswerteeinheit ist dazu eingerichtet, die Messsignale anhand eines Frequenzspektrums und/oder ein oder mehrerer charakteristischer Frequenzen einer Kolbenposition zuzuordnen.

Der Erfindung liegt die Erkenntnis zugrunde, dass sich das Schwingungsverhalten des Zylinder-Kolben-Aggregates in Abhängigkeit der Kolbenposition verändert und die Charakterisierung der Schwingung einen Rückschluss auf die Kolbenposition erlaubt.

Die Anregung durch das Anregungselement kann sowohl durch einen stoßartigen Impuls oder in Form mehrerer aufeinander folgender Impulse mit einer Wiederholungsfrequenz erfolgen. Ebenso kann das Zylinder-Kolben-Aggregat durch eine multifrequente Anregung, also mit mehreren Anregungsfrequenzen, zu der Schwingung angeregt werden. Das Frequenzspektrum der multifrequenten Anregung kann dabei insbesondere dem Frequenzspektrum eines weißen Rauschens entsprechen. Damit lässt sich das Zylinder-Kolben-Aggregat auf einfache Weise mit einer Vielzahl unterschiedlicher Frequenzen anregen und damit in eine Schwingung mit entsprechenden Frequenzanteilen versetzen.

Aufgrund der mechanischen, tribologischen und/oder akustischen Eigenschaften des Zylinder-Kolben-Aggregats wird ein Teil der Anregungsfrequenzen in der Schwingung gedämpft und ein anderer Teil der Anregungsfrequenzen verstärkt. Dies führt zu einem charakteristischen Schwingungsbild des Zylinder-Kolben-Aggregats. Verändert sich nun die Position des Kolbens, verändert sich auch das Schwingungsbild des Zylinder-Kolben-Aggregats. Gemäß einer wesentlichen Erkenntnis der Anmelderin, ist die Veränderung des Schwingungsbildes insbesondere von der mechanischen Struktur des Zylinder-Kolben-Aggregates abhängig und vorrangig durch seine Steifigkeit und Masse beeinflusst.

Der Detektor dient dazu, das veränderliche Schwingungsbild der Schwingung des Zylinder-Kolben-Aggregates in Form des Messsignals zu erfassen und kann in Form eines Körperschallsensors, eines Laservibrometers und/oder eines Mikrofons ausgestaltet sein. Grundsätzlich ist die mechanische Schwingung des Zylinder-Kolben-Aggregates unabhängig von einem bestimmten Messprinzip messbar. Die gemessene Schwingung wird durch den Detektor in ein Messsignal mit einem zeitlichen Verlauf, insbesondere einen Spannung-Zeit-Verlauf, gewandelt.

Durch Auswertung des Messsignals, z.B. durch Demodulation, kann ein Frequenzspektrum oder die ein oder mehreren charakteristischen Frequenzen der Schwingung des Zylinder-Kolben-Aggregates identifiziert werden.

Das Frequenzspektrum kann diskret oder kontinuierlich sein und eine Information darüber enthalten, welche Frequenzanteile die Schwingung des Zylinder-Kolben-Aggregates umfasst und mit welcher Schwingungsamplitude sie jeweils einhergehen.

Die ein oder mehreren charakteristischen Frequenzen können unmittelbar aus dem Messsignal bestimmt werden. Die ein oder mehreren charakteristischen Frequenzen können sowohl deutlich als auch schwach ausgeprägten Frequenzen entsprechen, die einen Anteil an der Schwingung des Zylinder-Kolben-Aggregates haben. Der Begriff "charakteristische Frequenz" bezieht sich somit nicht auf einen festen Betrag einer Frequenz, sondern eine Frequenz, die in ihrem Betrag in Abhängigkeit der Kolbenposition variieren kann und dabei einen erkennbaren Anteil an der Schwingung des Zylinder-Kolben-Aggregates hat. Eine solche charakteristische Frequenz kann somit in verschiedenen Frequenzbereichen liegen und durch einen Hersteller und/oder Anwender des Messsystems z.B. abhängig von Bauform und Größe des Zylinder-Kolben-Aggregats, identifiziert und für die Positionsmessung des Kolbens genutzt werden.

Bei Veränderung der Kolbenposition des Zylinder-Kolben-Aggregats verändern sich sowohl das Frequenzspektrum als auch die ein oder mehreren charakteristischen Frequenzen.

Die Veränderung des Frequenzspektrums in Abhängigkeit der Kolbenposition kann sich durch eine Verlagerung (Verschiebung) des gesamten Frequenzspektrums in einen niedrigeren oder höheren Frequenzbereich äußern. Ebenso ist es möglich, dass einzelne Frequenzanteile im Frequenzspektrum bei Veränderung der Kolbenposition gedämpft oder verstärkt werden und sich das Frequenzspektrum teilweise oder vollständig verändert.

Die Veränderung der charakteristischen Frequenz in Abhängigkeit der Kolbenposition kann sich durch eine Erhöhung oder eine Verringerung des Frequenzwertes äußern. Dabei wird die Amplitude, die der charakteristischen Frequenz zugeordnet werden kann, bei Veränderung der Kolbenposition nicht übermäßig gedämpft.

Anhand der Veränderung des Frequenzspektrums und/oder der Verschiebung einer oder mehrerer charakteristischer Frequenzen kann die Kolbenposition geschätzt oder eindeutig bestimmt werden. Im einfachsten Fall können das Frequenzspektrum und/oder die charakteristische Frequenz bei zwei Kolbenpositionen jeweils ermittelt und anschließend durch die Auswerteeinheit miteinander verglichen werden. Dabei kann ein Differenzwert, z.B. in Form einer Differenzfrequenz oder mehrerer Differenzfrequenzen ermittelt werden. Sofern die Ausgangsposition des Kolbens, z.B. eine Endlage im Zylinder, bekannt ist, kann mit dem Differenzwert auf die Veränderung der Kolbenposition und damit auch auf die Kolbenposition geschlossen werden.

Der Vorteil des erfindungsgemäßen Messsystems liegt in der Unabhängigkeit der charakteristischen Frequenz und des Frequenzspektrums von äußeren Umgebungseinflüssen, wie z.B. Verschmutzung infolge von Abrasion innerhalb des Zylinders. Dadurch lässt sich die Genauigkeit des Verfahrens im Vergleich zum Stand der Technik steigern. Darüber hinaus können sowohl das Anregungselement als auch der Detektor an der Außenseite des Zylinder-Kolben-Aggregats an nahezu beliebiger Stelle angeordnet werden, ohne dieses konstruktiv verändern zu müssen. Dies erlaubt eine Nachrüstung des erfindungsgemäßen Messsystems an vorhandenen Zylinder-Kolben-Aggregaten. Anregungselement und Detektor können z.B. einfach durch Aufkleben an der Zylinderaußenfläche befestigt werden.

Bei einer bevorzugten Ausführungsform des Wegmesssystems umfasst die Auswerteeinheit eine Speichereinheit mit einer darin gespeicherten Referenzinformation, insbesondere einem Referenzspektrum und/oder einem Referenzwert und/oder einer Abbildungsvorschrift und/oder einem Vorhersagemodell, wobei die Referenzinformation eine Abhängigkeit der ein oder mehreren charakteristischen Frequenzen oder des Frequenzspektrums von der Kolbenposition beschreibt.

Im einfachsten Fall kann eine Referenzinformation in Form eines oder mehrerer Referenzwerte vorliegen, die sowohl durch den Hersteller des Messsystems und/oder des Zylinder-Kolben-Aggregates als auch durch den Anwender mithilfe einer Referenzmessung ermittelt werden können. Bei einer solchen Referenzmessung kann der Kolben von einer ersten Endlage in eine zweite Endlage des Zylinder-Kolben-Aggregats verfahren werden, während die Kolbenposition mit einem Referenzmessverfahren z.B. durch optische Messung des Hubes der Kolbenstange erfasst wird. Gleichzeitig erfolgt eine mechanische Anregung des Zylinder-Kolben-Aggregats sowie die Ermittlung eines oder mehrerer charakteristischer Referenzfrequenzen oder einem Referenzspektrum jeweils zu einem diskreten Zeitpunkt während der Referenzmessung. Alle gemessenen Referenzfrequenzen oder Referenzspektren können anschließend jeweils einem Hub der Kolbenstange aus dem Referenzmessverfahren und damit auch einer Kolbenposition zugeordnet werden. Die Kolbenposition kann dabei in Form eines Hubweges des Kolbens absolut z.B. in Millimetern und/oder relativ z.B. prozentual, anteilig am möglichen Gesamthub angegeben sein. Für eine hohe Auflösung sollte zwischen den einzelnen Messungen eine kurze Wegstrecke liegen.

Die Referenzfrequenzen stellen jeweils einen skalaren Wert dar, der mindestens einer Kolbenposition zugeordnet werden kann. Die Referenzinformation kann in diesem Fall z.B. in Form einer Tabelle vorliegen. Im Gegensatz dazu können die Referenzspektren jeweils einen frequenzabhängigen Verlauf haben, wobei der gesamte Verlauf mindestens einer Kolbenposition zugeordnet werden kann. Die Referenzinformation kann in diesem Fall somit in Form einer Schar an Referenzspektren vorliegen, wobei jedes Referenzspektrum einer Kolbenposition zugeordnet ist.

Während einer tatsächlichen Messung nach der Referenzmessung kann eine gemessene charakteristische Frequenz oder Frequenzspektrum mit einer geeigneten Form von Referenzinformation verglichen werden. Durch Abweichungsberechnungen kann ermittelt werden, welche Referenzinformation der aktuell gemessenen Frequenz oder dem Frequenzspektrum am ähnlichsten ist. Sobald das Ähnlichste gefunden wurde, kann die Kolbenposition ausgegeben werden.

Die Abhängigkeit der ein oder mehreren charakteristischen Frequenzen und/oder des Frequenzspektrums von der Kolbenposition kann ebenso durch Gleichungen beschrieben sein, die z.B. aus der Literatur zur Schwingungscharakterisierung zylindrischer Räume bekannt sind. Ebenso ist es möglich, die besagte Abhängigkeit numerisch zu simulieren oder analytisch zu bestimmen. Damit lässt sich eine Referenzinformation in Form einer Abbildungsvorschrift gewinnen, z.B. in Form eines Polynoms oder Entscheidungsbaums, und in der Speichereinheit der Auswerteeinheit hinterlegen.

Zudem liegt es im Rahmen der Erfindung, dass die Referenzinformation durch ein Blackbox-Modell oder Methoden der künstlichen Intelligenz oder des maschinellen Lernens in Form eines Vorhersagemodells ermittelt wird. Dabei können z.B. bereits ermittelte Zusammenhänge aus zeitlich aufwändigen Simulationsstudien oder der Referenzmessung dazu genutzt werden, das Vorhersagemodell z.B. mittels eines künstlichen neuronalen Netzes zu trainieren. Durch Eingabe der ein oder mehreren charakteristischen Frequenzen und/oder des Frequenzspektrums in die Auswerteeinheit kann mit dem Vorhersagemodell bei einer tatsächlichen Messung eine Zuordnung der charakteristischen Frequenz oder des Frequenzspektrums zu der Kolbenposition erfolgen.

Die Speichereinheit kann als Festplatte eines Auswerterechners oder als RAM, EPROM, EEPROM, FLASH-ROM o.ä. eines Mikrocontrollers ausgestaltet sein.

Die Speichereinheit kann mit dem Detektor über eine Datenübertragung verbunden, in den Detektor integriert sein oder ein gemeinsames Gehäuse mit ihm aufweisen.

In einer vorteilhaften Weiterbildung ist die Auswerteeinheit dazu ausgestaltet, die Messsignale und/oder eine aus den Messsignalen abgeleitete Größe, insbesondere das Frequenzspektrum und/oder die ein oder mehreren charakteristischen Frequenzen, zumindest teilweise einer Strukturschwingung des Zylinder-Kolben-Aggregates zuzuordnen und den der Strukturschwingung zugeordneten Teil der Messsignale und/oder der aus den Messsignalen abgeleiteten Größe für die Ermittlung der Kolbenposition zu verwenden. Eine solche Strukturschwingung umfasst vor allem eine Rohrschwingung des Zylinderrohrs des Zylinder-Kolben-Aggregats.

Die vorstehend beschriebene Weiterbildung beruht auf der Erkenntnis der Anmelderin, dass die Veränderung der Schwingungscharakteristika des Zylinder-Kolben-Aggregates in Abhängigkeit von der Kolbenposition im Wesentlichen auf die Strukturschwingung des Zylinder-Kolben-Aggregates zurückzuführen ist. Allerdings wird die Strukturschwingung von der Schwingung des im Zylinder-Kolben-Aggregate enthaltenen Hydraulikmediums überlagert. Die Schwingung des Hydraulikmediums ist jedoch temperaturabhängig und von weiteren Einflussfaktoren wie Alter, Zusammensetzung oder etwa dem Verschmutzungsgrad des Hydraulikmediums beeinflusst. Dadurch wird die Ermittlung der Kolbenposition ungenau.

Eine Schwingungsanregung des Hydraulikmediums stellt daher einen unerwünschten Störeffekt dar und es liegt im Rahmen der Erfindung, Frequenzanteile im Schwingungsspektrum, die einer Schwingungsanregung des Hydraulikmediums zugeordnet werden können, zu unterdrücken oder bei der Auswertung zu ignorieren.

Untersuchungen der Anmelderin haben ergeben, dass die Frequenzanteile der Strukturschwingung bei einer mechanischen Schwingung des Zylinder-Kolben-Aggregates in einem anderen Frequenzbereich liegen können als die des Hydraulikmediums. Diese unterschiedlichen Frequenzbereiche lassen sich experimentell, insbesondere unter Verwendung von Methoden des maschinellen Lernens, in einfacher Weise ermitteln. Dadurch ist es möglich, die Messsignale für die Ermittlung der Kolbenposition auch nur in demjenigen Frequenzbereich auszuwerten, in dem das Hydraulikmittel einen vernachlässigbaren Einfluss auf das Schwingungsbild des Zylinder-Kolben-Aggregates hat.

In einer einfachen Ausführungsform können die Messsignale des Detektors im Zeitbereich gefiltert werden. Hierfür weist die Auswerteeinheit vorzugsweise einen Filter auf, welcher dazu ausgestaltet ist, das Messsignal in einer Weise zu verarbeiten, dass nur diejenigen Frequenzanteile des Messsignals für die Ermittlung des Frequenzspektrums und/oder einer darin enthaltenen charakteristischen Frequenz herangezogen werden, welche im Wesentlichen nur die Strukturschwingung des Zylinder-Kolben-Aggregates repräsentieren.

Alternativ oder zusätzlich kann das Messsignal im Frequenzbereich gefiltert oder anderweitig verarbeitet werden. Insbesondere kann das ermittelte Frequenzspektrum auf den Frequenzbereich begrenzt (auch: gefenstert) werden, in welchem die Frequenzanteile des Frequenzspektrums der Strukturschwingung zuzuordnen sind. Vorzugsweise umfasst dieser Bereich mindestens eine charakteristische Frequenz, welche für die Ermittlung der Kolbenposition herangezogen werden kann.

Es liegt im Rahmen der vorteilhaften Weiterbildung, dass die Referenzinformation ebenfalls einen gefilterten Anteil enthält oder vollständig gefiltert ist, um einen einfachen Abgleich mit einem gefilterten Frequenzspektrum und/oder einer charakteristischen Frequenz zuzulassen.

In einer weiteren bevorzugten Ausführungsform des Wegmesssystems ist die Auswerteeinheit eingerichtet, eine erste Eigenfrequenz oder eine erste Resonanzfrequenz des Zylinder-Kolben-Aggregats zu ermitteln und aus einer ersten Referenzkurve eine Annahme für die Kolbenposition abzuleiten.

Die Eigenfrequenzen eines Systems sind die Frequenzen, bei denen das System schwingt, wenn es nach impulsartiger Anregung sich selbst überlassen ist. Resonanzfrequenzen sind die Frequenzen, bei denen sich bei multifrequenter Anregung, also einer erzwungenen Schwingung, Maxima der Schwingungsamplitude einstellen. Bei einem ungedämpften System fallen Eigenfrequenzen und Resonanzfrequenzen zusammen.

Im einfachsten Fall kann die Ermittlung der Kolbenposition anhand ein einzigen charakteristischen Frequenz erfolgen. Dies kann eine Grundfrequenz sein, bei der das System mit maximaler Amplitude schwingt, oder die niedrigste Frequenz, bei der Resonanz auftritt.

Bei einer charakteristischen Frequenz, also einer Eigen- oder Resonanzfrequenzen, handelt es sich um eine Raumresonanz eines Zylinderraums des Zylinder-Kolben-Aggregates. Durch Vergrößerung oder Verringerung des Volumens des besagten Zylinderraums verändert sich daher auch dessen Resonanzeigenschaft.

Im Falle eines Zylinder-Kolben-Aggregats mit einem einzigen Zylinderraum, wie z.B. einem Tauchkolbenzylinder, verändert sich die charakteristische Frequenz monoton in Abhängigkeit von der Kolbenposition. Damit ergibt sich ein ebenso monotoner Verlauf von Referenzwerten in Abhängigkeit von der Kolbenposition. Werden die Referenzwerte z.B. durch Interpolation verbunden entsteht eine Referenzkurve. Mit einer solchen monoton verlaufenden Referenzkurve ist eine eindeutige Zuordnung der ersten Resonanzfrequenz oder ersten Eigenfrequenz zu der Kolbenposition möglich.

Im Falle eines Zylinder-Kolben-Aggregats mit zwei Zylinderräumen, typischerweise einen Kolbenraum und einem Ringraum, überlagern sich die messbaren Raumresonanzen der beiden Zylinderräume, wobei das Spektrum vom Beitrag des in Abhängigkeit der Kolbenposition jeweils volumengrößeren Zylinderraums dominiert wird. Ferner kann der Kolbenhub einen Einfluss auf die Raumresonanzen haben.

Bei einer Ausfahrbewegung des Kolbens verringert sich das Volumen des ursprünglich größeren Zylinderraums. Dessen Eigen- bzw. Resonanzfrequenz steigt daher an. Am Volumengleichheitspunkt, an dem die Volumina der beiden Zylinderräume etwa gleich groß sind, fallen die Eigen- bzw. Resonanzfrequenz beider Zylinderräume zusammen, sodass die Eigen- bzw. Resonanzfrequenz ihr Maximum findet. Bei der weiteren Kolbenbewegung wird das Spektrum nun von der Resonanz des ursprünglich kleineren Kolbenraums geprägt, dessen Volumen sich stetig vergrößert, wodurch sich die charakteristische Frequenz des Zylinder-Kolben-Aggregats wieder verringert.

Bei der Bestimmung der Kolbenposition bedeutet dies, dass eine Eigen- bzw. Resonanzfrequenz zwei möglichen Kolbenpositionen, je einer unterhalb und einer oberhalb des Volumengleichheitspunktes, zugeordnet werden kann. Von diesen entspricht jedoch nur eine der tatsächlichen Kolbenposition. Eine eindeutige Zuordnung kann dann anhand weiterer Kriterien, wie etwa der geförderten Hydraulikfluidmenge, einer vorbekannten Ausgangsposition und/oder der Bewegungsrichtung des Kolbens erschlossen werden.

Bei einer bevorzugten Weiterbildung ist jedoch vorgesehen, dass zur eindeutigen Bestimmung der Kolbenposition eine zweite Raumresonanz ausgewertet wird. Hierzu ist die Auswerteeinheit eingerichtet, zusätzlich eine zweite Eigenfrequenz oder eine zweite Resonanzfrequenz des Zylinder-Kolben-Aggregats in einem gegenüber der ersten Eigenfrequenz oder Resonanzfrequenz höheren Frequenzbereich zu ermitteln und anhand einer zweiten Referenzkurve die Annahme für die Kolbenposition zu verifizieren und/oder zu verfeinern.

Auch die zweite charakteristische Frequenz zeigt eine Abhängigkeit von der Kolbenposition. Es zeigt sich jedoch, dass die Veränderung der zweiten, in einem höheren Frequenzbereich liegenden charakteristischen Frequenz eine von der ersten, niederfrequenteren charakteristischen Frequenz unterschiedliche Abhängigkeit von der Kolbenposition aufweist. Insbesondere kann der Maximalwert der zweiten Eigen- bzw. Resonanzfrequenz bei einer gegenüber der ersten Eigen- bzw. Resonanzfrequenz verschobenen Kolbenposition auftreten. Somit können zwar auch der zweiten charakteristischen Frequenz zwei unterschiedliche Kolbenpositionen zugeordnet werden, jedoch lässt sich nur eine Kolbenposition - die tatsächliche Kolbenposition - beiden gemessenen charakteristischen Frequenzen zuordnen. Durch Auswertung einer zweiten Raumresonanz kann also die zunächst anhand der ersten charakteristischen Frequenz getroffene Annahme verifiziert und/oder verfeinert werden. Damit erhöht sich die Genauigkeit des Verfahrens.

In einer weiteren bevorzugten Ausführungsform des Wegmesssystems ist das Anregungselement dazu ausgestaltet, das Zylinder-Kolben-Aggregat durch eine multifrequente Anregungsschwingung oder durch eine Anregungsschwingung mit sich zeitlich ändernder Frequenz anzuregen.

Eine multifrequente Anregung kann entweder mit einer Anregungsschwingung erfolgen, bei der mehrere Anregungsfrequenzen zeitgleich überlagert sind oder jedoch zeitlich versetzt, systematisch variiert werden. Im Fall mehrerer zeitgleich überlagerter Anregungsfrequenzen nimmt die mechanische Anregung des Zylinder-Kolben-Aggregates eine vergleichsweise kurze Zeit in Anspruch. Das dabei gewonnene Messsignal muss jedoch mittels Demodulation in seine Frequenzbestandteile zerlegt werden, die als charakteristische Frequenzen oder als Frequenzspektrum zur Ermittlung der Kolbenposition herangezogen werden können.

Eine sich zeitlich verändernde Anregungsfrequenz erfordert vergleichsweise eine höhere Zeit, da der gesamte relevante Frequenzbereich in einem definierten Zeitraum durchlaufen werden muss. Allerdings kann unmittelbar anhand des dabei gewonnenen Messsignals erkannt werden, bei welchen Frequenzen eine Amplitude verstärkt oder gedämpft wurde. Somit verkürzt sich hierbei der Aufwand in der Ermittlung charakteristischer Frequenzen oder des Frequenzspektrums.

Durch Ausgestaltung des Anregungselementes, das in der Lage ist, wahlweise beide Arten der multifrequenten Anregung zu erzeugen, kann durch entsprechende Anregung des Zylinder-Kolben-Aggregats wahlweise ein gewünschter zu erzielender Vorteil erreicht werden.

Die Erzeugung des sich zeitlich veränderlichen Frequenzverlaufs kann realisiert werden, indem das Anregungselement, wie z.B. ein Piezoaktor, mit einer Wechselspannung betrieben wird. Die Wechselspannung kann dabei z.B. durch einen Frequenzgenerator bereitgestellt und an diesem einstellbar sein. Bekannte Frequenzgeneratoren bieten die Möglichkeit, die bereitgestellte Wechselspannung in ihrer Form zur Abbildung mehrerer überlagerter Frequenzen sowie ihrem zeitlichen Verlauf zur Durchführung eines sog. Frequenzsweeps bedarfsgerecht einzustellen.

In einer weiteren bevorzugten Ausführungsform des Wegmesssystems ist die Auswerteeinheit eingerichtet, eine Fourier-Transformation und/oder Wavelet-Transformation der Messsignale durchzuführen, um das Frequenzspektrum und/oder die charakteristischen Frequenzen zu ermitteln.

Sowohl die Fourier- als auch die Wavelet-Transformation erlauben es, aus dem Messsignal ein Frequenzspektrum sowie die charakteristische Frequenz zu ermitteln. Dieses Frequenzspektrum kann einen kontinuierlichen Verlauf aufweisen anhand dessen die Kolbenposition oder zunächst nur die charakteristischen Frequenzen identifiziert werden können. Eine Fast-Fourier-Transformation kann sowohl als diskrete als auch als kontinuierliche Variante auf der Auswerteeinheit implementiert sein. Der Vorteil in der Verwendung der Fourier-Transformation liegt darin, dass es sich um ein schnelles und effizientes Rechenverfahren handelt.

Vor Durchführung der Fourier- und/oder Wavelet Transformation kann das Messsignal im Zeitbereich eingegrenzt werden. Dadurch können nur die relevanten zeitlichen Verläufe der gemessenen Schwingung in die Auswertung einbezogen werden. Insbesondere kann bei impulsförmiger Anregung das Einschwingverhalten ausgegrenzt werden. Eine derartige Eingrenzung reduziert auch den Einfluss womöglich bestehender störender Schwingungen aus der Umgebung des Zylinder-Kolben-Aggregats. Eine Fensterung des Signals im Frequenzbereich innerhalb der jeweiligen Transformationen ist somit überflüssig, wodurch diese noch schneller durchführbar sind.

Bei einer weiteren bevorzugten Ausführungsform des Wegmesssystems umfasst das Anregungselement einen elektromagnetischen Stößel. Ein Elektromagnet beschleunigt hierbei einen Anker entgegen einer federgetriebenen Rückstellkraft gegen die Außenwand des Zylinders. Der Vorteil in der Verwendung des elektromagnetischen Stößels ist seine kostengünstige Realisierbarkeit sowie die automatisierbare Ansteuerung. Die Ansteuerung des elektromagnetischen Stößels kann sowohl durch einen Spannungsimpuls als auch periodisch erfolgen.

In einer vorteilhaften Weitebildung sind das Anregungselement und der Detektor jeweils an einer Außenseite des Zylinder-Kolben-Aggregats angeordnet. Das Anregungselement ist dazu ausgestaltet, das Zylinderrohr des Zylinder-Kolben-Aggregats an dessen Außenseite zu mechanischer Schwingung anzuregen. Der Detektor ist dazu ausgestaltet ist, die mechanischen Schwingungen des Zylinderrohrs an der Außenseite zu erfassen.

Ein Vorteil der vorstehend beschriebenen Weiterbildung ist darin zu sehen, dass das Zylinder-Kolben-Aggregat baulich nicht verändert werden muss, um das Wegmesssystem zur Ermittlung der Kolbenposition verwenden zu können. Hierfür sind das Anregungselement sowie der Detektor äußerlich, beispielsweise an der Zylinderaußenfläche des Zylinder-Kolben-Aggregates angeordnet oder an einer seiner Stirnseiten. Hierdurch lässt sich in einfacher Weise sicherstellen, dass die Struktur des Zylinder-Kolben-Aggregates unmittelbar zu mechanischer Schwingung angeregt wird. Dadurch lassen sich die störenden Einflüsse einer Fluidschwingung des Hydraulikmediums reduzieren.

Bei einer bevorzugten Ausführungsform des Wegmesssystems umfasst der Detektor einen Beschleunigungsmesser, vorzugsweise eine inertiale Messeinheit.

Beschleunigungsmesser können eine bewegliche Schwingmasse enthalten, die mit einem piezoelektrischen Element gekoppelt ist. Wird der Beschleunigungsmesser am Zylinder-Kolben-Aggregat angeordnet, versetzt die mechanische Antwortschwingung die bewegliche Schwingmasse in Bewegung, die wiederum eine messbare elektrische Spannung am piezoelektrischen Element erzeugt. Die elektrische Spannung kann der Bewegung der Schwingmasse, die im Wesentlichen der Schwingung des Zylinder-Kolben-Aggregats entspricht, zugeordnet werden.

Inertiale Messeinheiten können eine Mehrzahl an Beschleunigungsmessern aufweisen, welche Schwingungsamplituden verschiedener Raumrichtungen erfassen können. Vorteilhaft ist dabei, dass die inertiale Messeinheit in einer beliebigen Ausrichtung am Zylinder-Kolben-Aggregat angeordnet werden kann. Dadurch können verschiedene Schwingmoden des Zylinder-Kolben-Aggregats zuverlässig erfasst werden.

Alternativ kann der Beschleunigungsmesser in Form eines kapazitiven Messaufnehmers ausgestaltet sein, bei dem die elektrische Kapazität sich infolge der Antwortschwingung messbar verändert.

Bei dem erfindungsgemäßen Verfahren wird eine Kolbenposition in einem Zylinder-Kolben-Aggregat mittels akustischer Resonanzanalyse ermittelt, indem das Zylinder-Kolben-Aggregat durch eine impulshafte oder eine multifrequente Anregung zu mechanischer Schwingung angeregt wird und ein oder mehrere charakteristische Frequenzen, mit denen das angeregte Zylinder-Kolben-Aggregats schwingt, oder ein Frequenzspektrum erfasst und anhand von einem Referenzwert oder einem Referenzspektrum einer Kolbenposition zugeordnet wird.

Vorteilhafterweise lässt sich das Verfahren mit dem erfindungsgemäßen Messsystem oder einer bevorzugten Ausführungsform des Messsystems durchführen. Es liegt im Rahmen der Erfindung, dass einzelne oder alle Verfahrensschritte automatisierbar sind. Ebenso liegt es im Rahmen der Erfindung, dass die Verfahrensschritte zeitlich unabhängig voneinander stattfinden können.

Weitere Vorteile sind den Ausführungsbeispielen gemäß den Figuren 1 bis 3 zu entnehmen.
- Figur 1: zeigt einen schematischen Aufbau eines Zylinder-Kolben-Aggregats mit einem Wegmesssystem zur Ermittlung einer Kolbenposition;
- Figur 2: zeigt zwei Referenzkurven für charakteristische Frequenzen in Abhängigkeit der Kolbenposition jeweils in einem Niederfrequenzbereich und einem Hochfrequenzbereich;
- Figur 3: zeigt eine Zuordnung zweier Resonanzfrequenzen zu einer Kolbenposition anhand von zwei Referenzkurven.

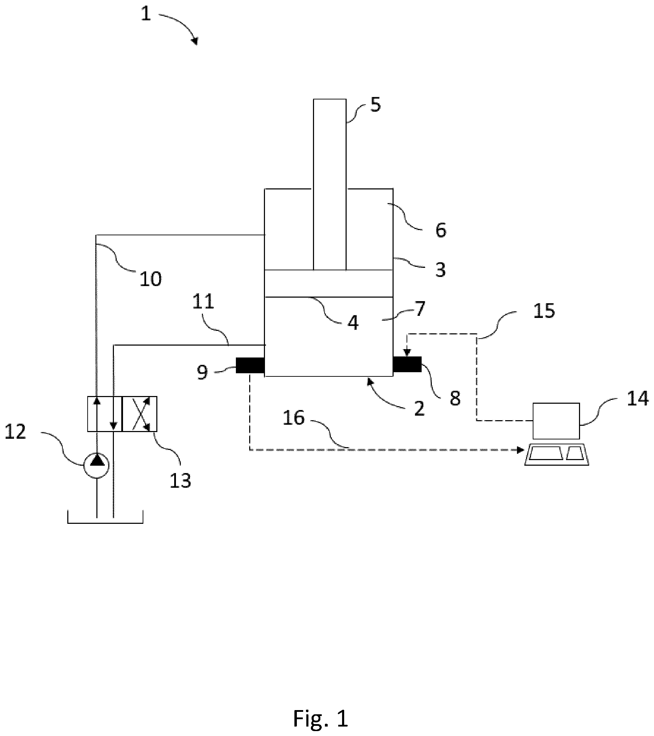

Figur 1 zeigt ein Wegmesssystem 1 für ein Zylinder-Kolben-Aggregat 2. Bei dem Zylinder-Kolben-Aggregat handelt es sich um einen doppelt wirkenden hydraulischen Aktor, mit einem Zylinder 3, einem dichtend geführten Kolben 4 sowie einer Kolbenstange 5, die mit dem Kolben 4 verbunden ist.

Kolben 4 unterteilt den Innenraum des Zylinders 3 in einen Ringraum 6 und einen Kolbenraum 7. An der Außenseite des Zylinders 2 sind ein elektromagnetischer Stößel 8 und eine inertiale Messeinheit 9 angeordnet. Eine Hydraulikleitung 10 ist mit dem Ringraum 6 und eine Hydraulikleitung 11 mit dem Kolbenraum 7 verbunden. Eine Zahnradpumpe 12 fördert ein Hydrauliköl (nicht gezeigt) durch ein 4/2-Wegeventil 13 wahlweise in den Ringraum 6 oder den Kolbenraum 7. In der gezeigten Ventilstellung wird Hydrauliköl in Ringraum 6 gefördert, wodurch sich das Volumen des Ringraums 6 vergrößert. Dabei wird das Hydrauliköl aus Kolbenraum 7 verdrängt, wodurch das Volumen des Kolbenraums 7 verringert wird.

Der Kolben 4 bewegt sich zwischen einer ersten Endlage und einer zweiten Endlage dichtend innerhalb des Zylinders 3. In der ersten Endlage befindet der Kolben 4 sich am oberen Deckel des Zylinders 3. In der zweiten Endlage liegt der Kolben 4 am unteren Deckel des Zylinders 3 an. Damit der Kolben 4 gezielt zwischen der ersten Endlage und der zweiten Endlage in eine definierte Position gebracht werden kann, muss die Förderung des Hydrauliköls, bei Erreichen der definierten Position des Kolbens 4 eingestellt werden. Dafür wird die Kolbenposition ermittelt und das zu fördernde Volumen des Hydrauliköls in Abhängigkeit der ermittelten Kolbenposition angepasst und bei Erreichen der gewünschten Kolbenposition auf null geregelt.

Die Ermittlung der Kolbenposition erfolgt, indem der elektromagnetische Stößel 8 einen mechanischen Impuls in das Zylinder-Kolben-Aggregat 2 einkoppelt und die inertiale Messeinheit 9 eine mechanische Antwortschwingung erfasst. Die mechanische Antwortschwingung wird in ein Messignal übersetzt. Sowohl die Ansteuerung des elektromagnetischen Stößels 8 als auch die Auswertung des Messsignals erfolgt durch eine Recheneinheit 14. Die Recheneinheit 14 ist dafür über eine Signalverbindung 15 mit dem elektromagnetischen Stößel 8 verbunden. Alternativ zu einer impulsförmigen Anregung mittels eines einfachen elektromagnetischen Stößels, kann auch eine multifrequente Anregung erfolgen. Hierzu wird als Anregungselement ein Schallerzeuger beispielsweise in Form eines Piezoelements verwendet, der über eine multifrequente Wechselspannung oder mit einem Frequenzsweep betrieben wird.

Recheneinheit 14 ist über eine Signalverbindung 16 mit der inertialen Messeinheit 9 verbunden. Die inertiale Messeinheit 9 umfasst einen physikalischen Messaufnehmer mit einer elektronischen Verstärkerschaltung (nicht gezeigt). Die Schwingung des Zylinder-Kolben-Aggregats 2 wird in ein Messsignal in Form eines Spannungs-Zeit-Verlaufs umgesetzt und über Signalverbindung 16 an die Recheneinheit 14 übertragen.

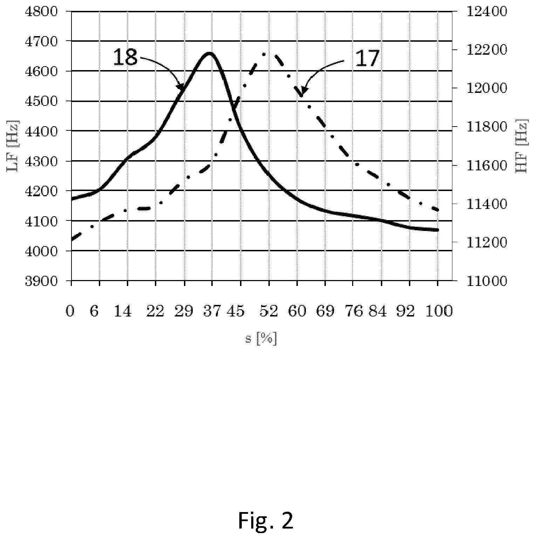

Das Messsignal wird durch die Recheneinheit 14 mittels einer Fourier-Transformation aus ihrem Zeit-Bereich in einen Frequenz-Bereich gewandelt. Das Ergebnis der Fourier-Transformation ist ein Frequenzspektrum, aus dem zwei Resonanzfrequenzen des Zylinder-Kolben-Aggregats 2 ermittelt werden können. Die Resonanzfrequenzen sind von der Kolbenposition abhängig. Der dabei geltende Zusammenhang lässt sich durch zwei Referenzkurven (vgl. Fig. 2) beschreiben, die durch den Hersteller des Zylinder-Kolben-Aggregats im Rahmen einer Referenzmessung ermittelt wurden. Die Referenzkurven des Zylinder-Kolben-Aggregats sind in Figur 2 gezeigt.

Figur 2 zeigt ein Diagramm mit einer Niederfrequenz-Ordinate LF, einer Hochfrequenz-Ordinate HF und einer Abszisse s. Die Niederfrequenz-Ordinate LF gibt einen Frequenzbereich zwischen 3900 Hz und 4800 Hz an, in der eine Referenzkurve 17 liegt. Die Hochfrequenz-Ordinate HF gibt einen Frequenzbereich zwischen 11000 Hz und 12400 Hz an, in der eine Referenzkurve 18 liegt. Die Abszisse s gibt eine Position des Kolbens eines Zylinder-Kolben-Aggregats in Prozent [%] an. 0% entsprechen dabei einer Position des Kolbens in der ersten Endlage, während 100% einer Position des Kolbens in der zweiten Endlage entsprechen.

Bei der Durchführung der Referenzmessung werden die Referenzkurven 17 und 18 ermittelt. Dabei wird der Kolben von der ersten Endlage in die zweite Endlage verfahren und das gemäß Figur 1 beschriebene Messverfahren durchgeführt. Währenddessen wird der Kolbenstangenhub mit einer Kamera erfasst. Durch mehrfache aufeinanderfolgende Ermittlung einer ersten Resonanzfrequenz und einer zweiten Resonanzfrequenz während der Bewegung des Kolbens können die Referenzkurven 17 und 18 ermittelt werden. Dabei gibt Referenzkurve 17 die Veränderung der ersten Resonanzfrequenz in einem Niederfrequenzbereich an während Referenzkurve 18 eine Veränderung der ersten Resonanzfrequenz in einem Hochfrequenzbereich angibt.

Während der Bewegung des Kolbens nimmt die erste Resonanzfrequenz gemäß Referenzkurve 17 von ca. 4050 Hz in der ersten Endlage bis zu einem Maximalbetrag bei ca. 4650 Hz bei ca. 52% des Hubweges zu. Oberhalb von ca. 52% des Hubweges nimmt sie bis zu einer Frequenz von ca. 4150 Hz ab.

Die zweite Resonanzfrequenz nimmt entsprechend der Referenzkurve 18 von ca. 11400 Hz in der ersten Endlage bis zu einem Maximalbetrag von ca. 12200 Hz bei ca. 37% des Hubweges zu. Oberhalb von 37% des Hubweges fällt die zweite Resonanzfrequenz NR2 wieder auf ca. 11250 Hz ab.

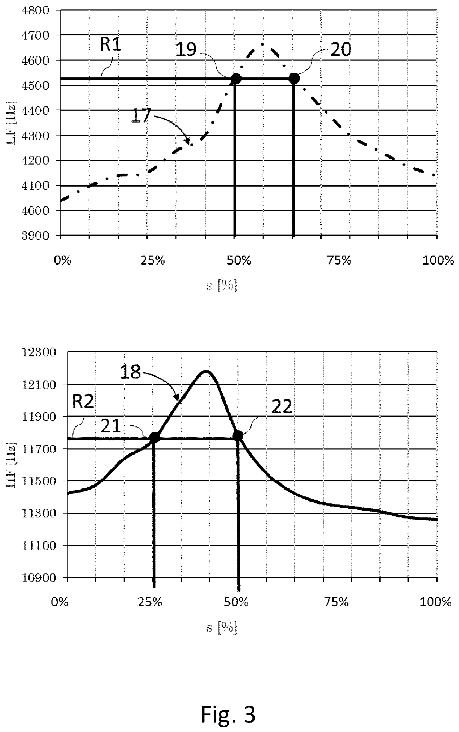

Die Referenzkurven 17 und 18 unterscheiden sich wie in Figur 2 gezeigt insbesondere durch die Lage ihrer Maxima, die jeweils bei 52% und 37% des Hubweges erreicht werden. Beide Referenzkurven 17 und 18 werden auf der Recheneinheit 14 (vgl. Figur 1) gespeichert. Bei der Anwendung des beschriebenen Messverfahrens werden die Referenzkurven 17 und 18 mit den ermittelten Resonanzfrequenzen verglichen, um eine Kolbenposition in Form eines Hubweges ermitteln zu können. Dies ist in Figur 3 gezeigt.

Figur 3 zeigt zwei Diagramme, die jeweils einen Verlauf der Referenzkurven 17 und 18 gemäß Figur 2 enthalten. Soll während des Betriebs des Zylinder-Kolben-Aggregats 2 (vgl. Figur 1) eine eindeutige Kolbenposition ermittelt werden, so lassen sich durch mechanische Anregung und Messung der Schwingung des Zylinder-Kolben-Aggregates eine erste Resonanzfrequenz R1 (ca. 4520 Hz) und eine zweite Resonanzfrequenz R2 (ca. 11750 Hz) ermitteln. Die erste Resonanzfrequenz R1 liegt dabei im Niederfrequenzbereich und die zweite Resonanzfrequenz R2 im Hochfrequenzbereich.

Wird die erste Resonanzfrequenz R1 in das obere Diagramm eingetragen und die sich ergebenden Schnittpunkte mit der Referenzkurve 17 graphisch ermittelt, ist zu sehen, dass der ersten Resonanzfrequenz R1 sowohl ein Hubweg von ca. 50% (vgl. Schnittpunkt 19) als auch von ca. 62% (vgl. Schnittpunkt 20) zugeordnet werden kann. Analog dazu lässt sich die zweite Resonanzfrequenz R2 sowohl einem Hubweg von ca. 25% (vgl. Schnittpunkt 21) als auch von ca. 50% (vgl. Schnittpunkt 22) zuordnen. Als tatsächliche Position des Kolbens ergibt sich somit aus der Kombination der beiden Resonanzmessungen der Schnittpunkt bei 50%.

## Patentansprüche

1. Wegmesssystem (1) zur Ermittlung einer Kolbenposition in einem Zylinder-Kolben-Aggregat (2), umfassend ein Anregungselement (8), einen Detektor (9) und eine mit dem Detektor (9) verbundene Auswerteeinheit (14), wobei das Anregungselement (8) ausgebildet ist, das Zylinder-Kolben-Aggregat (2) durch eine impulshafte oder eine multifrequente Anregung zu mechanischer Schwingung anzuregen und der Detektor (9) ausgebildet ist, mechanische Schwingungen des Zylinder-Kolben-Aggregats (2) zu erfassen und in Messsignale zu wandeln und bei dem die Auswerteeinheit (14) eingerichtet ist, die Messsignale anhand eines Frequenzspektrums und/oder ein oder mehrerer charakteristischer Frequenzen einer Kolbenposition zuzuordnen.

2. Wegmesssystem (1) nach Anspruch 1, bei dem die Auswerteeinheit (14) eine Speichereinheit mit einer darin gespeicherten Referenzinformation (17, 18) umfasst, insbesondere ein Referenzspektrum und/oder ein Referenzwert und/oder eine Abbildungsvorschrift und/oder ein Vorhersagemodell, wobei die Referenzinformation eine Abhängigkeit des Frequenzspektrums und/oder ein oder mehrerer charakteristischer Frequenzen (R1, R2) von der Kolbenposition beschreibt.

3. Wegmesssystem (1) nach Anspruch 1 oder 2, bei dem die Auswerteeinheit dazu ausgestaltet ist, die Messsignale und/oder eine aus den Messsignalen abgeleitete Größe, insbesondere das Frequenzspektrum und/oder die ein oder mehreren charakteristischen Frequenzen, zumindest teilweise einer Strukturschwingung des Zylinder-Kolben-Aggregates zuzuordnen und den der Strukturschwingung zugeordneten Teil der Messsignale und/oder der aus den Messsignalen abgeleiteten Größe für die Ermittlung der Kolbenposition zu verwenden.

4. Wegmesssystem nach einem der voranstehenden Ansprüche, bei dem die Auswerteeinheit (14) eingerichtet ist, eine erste Eigenfrequenz (R1, R2) oder eine erste Resonanzfrequenz (R1, R2) des Zylinder-Kolben-Aggregats (2) zu ermitteln und aus einer ersten Referenzkurve (17, 18) eine Annahme für die Kolbenposition abzuleiten.

5. Wegmesssystem (1) nach Anspruch 4, bei dem die Auswerteeinheit (14) eingerichtet ist, zusätzlich eine zweite Eigenfrequenz (R1, R2) oder eine zweite Resonanzfrequenz (R1, R2) des Zylinder-Kolben-Aggregats (2) in einem gegenüber der ersten Eigenfrequenz (R1, R2) oder Resonanzfrequenz (R1, R2) höheren Frequenzbereich zu ermitteln und anhand einer zweiten Referenzkurve (17, 18) die Annahme für die Kolbenposition zu verifizieren und/oder zu verfeinern.

6. Wegmesssystem (1) nach einem der voranstehenden Ansprüche, bei dem das Anregungselement (8) dazu ausgestaltet ist, das Zylinder-Kolben-Aggregat (2) durch eine multifrequente Anregungsschwingung oder durch eine Anregungsschwingung mit sich zeitlich ändernder Frequenz anzuregen.

7. Wegmesssystem (1) nach einem der voranstehenden Ansprüche, bei dem die Auswerteeinheit (14) eingerichtet ist, eine Fourier-Transformation und/oder eine Wavelet-Transformation der Messsignale durchzuführen, um das Frequenzspektrum und/oder die ein oder mehreren charakteristischen Frequenzen (R1, R2) zu ermitteln.

8. Wegmesssystem (1) nach einem der voranstehenden Ansprüche, bei dem das Anregungselement und der Detektor jeweils an einer Außenseite des Zylinder-Kolben-Aggregats angeordnet sind und das Anregungselement dazu ausgestaltet ist, das Zylinder-Kolben-Aggregat an der Außenseite zu mechanischer Schwingung anzuregen und der Detektor dazu ausgestaltet ist, die mechanischen Schwingungen des Zylinder-Kolben-Aggregates an der Außenseite zu erfassen.

9. Wegmesssystem (1) nach einem der voranstehenden Ansprüche, bei dem das Anregungselement (8) einen elektromagnetischen Stößel oder ein Piezo-Element umfasst.

10. Wegmesssystem (1) nach einem der voranstehenden Ansprüche, bei dem der Detektor (9) einen Beschleunigungsmesser, vorzugsweise eine inertiale Messeinheit, umfasst.

11. Verfahren zur Ermittlung einer Kolbenposition in einem Zylinder-Kolben-Aggregat (2) mittels akustischer Resonanzanalyse, indem das Zylinder-Kolben-Aggregat (2) durch eine impulshafte oder eine multifrequente Anregung zu einer mechanischen Schwingung angeregt wird und ein Frequenzspektrum der Schwingung und/oder ein oder mehrere charakteristische Frequenzen, mit denen das angeregte Zylinder-Kolben-Aggregat (2) schwingt, erfasst und anhand von einer Referenzinformation (14, 15) einer Kolbenposition zugeordnet wird.
